**Europäisches Patentamt**

**European Patent Office**

**Office européen des brevets**

(11) Numéro de publication : **0 369 897 B1**

(12) **FASCICULE DE BREVET EUROPEEN**

(45) Date de publication du fascicule du brevet :
**21.07.93 Bulletin 93/29**

(51) Int. Cl.[5] : **C01G 49/00**

(21) Numéro de dépôt : **89420399.1**

(22) Date de dépôt : **17.10.89**

(54) **Procédé de préparation de particules magnétiques d'hexaferrites, particules obtenues et produit les contenant.**

Jointe à la demande no. 89912113.1/0439524 (numéro de dépôt/numéro de publication de la demande européenne) par décision du 30.12.91.

(30) Priorité : **18.10.88 FR 8814221**

(43) Date de publication de la demande :
**23.05.90 Bulletin 90/21**

(45) Mention de la délivrance du brevet :
**21.07.93 Bulletin 93/29**

(84) Etats contractants désignés :
**AT BE CH DE ES FR GB IT LI LU NL SE**

(56) Documents cités :
**EP-A- 0 045 246**
**US-A- 4 025 449**

(56) Documents cités :
**PATENT ABSTRACTS OF JAPAN, vol. 11, no. 246 (C-439)[2693], 11 août 1987**
**PATENT ABSTRACTS OF JAPAN, vol. 11, no. 315 (C-451)[2762], 14 octobre 1987**

(73) Titulaire : **KODAK-PATHE**
**26, rue Villiot**
**F-75594 Paris Cedex 12 (FR)**

(72) Inventeur : **Robert,Jean-Christophe**
**Kodak Pathé Zone Industrielle**
**F-71102 Chalon sur Saone Cédex (FR)**
Inventeur : **Mari,Pierre-André Marie Vincent**
**Kodak.Pathé Zone Industrielle**
**F-71102 Chalon sur Saone Cédex (FR)**

(74) Mandataire : **Buff, Michel**
**Kodak-Pathé Département des Brevets et Licences CRT Centre de Recherches et de Technologie Zone Industrielle**
**F-71102 Chalon sur Saône Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de préparation d'hexaferrites de baryum ou de strontium particulièrement utiles dans les procédés d'enregistrement magnétique.

Les hexaferrites de baryum et de strontium sont bien connues pour leurs propriétés magnétiques. Elles possèdent en particulier un champ coercitif élevé, ce qui les rend utiles dans toutes les applications où un tel champ coercitif élevé est souhaitable.

Depuis quelques années, on a développé des produits magnétiques, tels que des disques, des cartes et des bandes, pour des applications dans lesquelles une bonne conservation de l'enregistrement et/ou une bonne résistance à la falsification ou à l'effacement accidentel sont souhaitées. Ceci concerne notamment les cartes de crédit, les cartes d'identité, ou les cartes d'accès contrôlé, etc. à piste magnétique. Les hexaferrites offrent des possibilités pour de telles applications. En outre, elles permettent une densité élevée d'enregistrement.

L'obtention des hexaferrites est connue depuis longtemps, en particulier par coprécipitation en solution alcaline d'un sel ferrique et d'un sel de Ba ou Sr, puis calcination à haute température du coprécipité obtenu. C.D. Mee et J.C. Jeschke "Single-Domain Properties in Hexagonal Ferrites" J. of Applied Physics, Vol. 34, n°4, 1271-2, 1963, décrivent la préparation d'hexaferrites. Ce procédé ancien qui est assez facile à mettre en oeuvre, présente cependant l'inconvénient d'aboutir à un produit sous forme de blocs très durs, difficiles à broyer. Les particules obtenues après broyage sont de taille non homogène, difficilement dispersables dans les liants utilisés pour les milieux magnétiques et ont tendance à former des agglomérats lors du traitement de calcination. Ces inconvénients peuvent rendre les particules inaptes à la préparation des couches d'enregistrement magnétique. De nombreux procédés ont été proposés récemment pour remédier à ces inconvénients, tels que la synthèse hydrothermale, ou des procédés améliorés de coprécipitation. Des procédés de synthèse courants des hexaferrites de Ba et de Sr conduisent à l'obtention de particules sous forme de plaquettes hexagonales.

Il est donc souhaitable d'améliorer en même temps la dispersabilité et les propriétés magnétiques des particules d'hexaferrites.

Dans les procédés connus par coprécipitation, on utilise un sel de baryum ou de strontium en présence de carbonate, de façon à coprécipiter le carbonate de Ba ou de Sr et l'hydroxyde de fer. Les hydroxydes de baryum et de strontium sont en effet partiellement solubles, ce qui a pour résultat, si on les utilise dans le coprécipité, qu'on ne peut obtenir la stoechiométrie souhaitée de l'hexaferrite, à moins d'utiliser des excès importants par rapport à la stoechiométrie. Plutôt que les hydroxydes,on utilise donc des carbonates insolubles, même à pH neutre. Au cours du lavage du coprécipité, il n'y a aucune perte de baryum ou de strontium et les quantités de réactifs engagées sont en général tels que la stoechiométrie est égale à 1 à 1,2.

Cependant, les grains coprécipités de carbonate de Ba ou de Sr étant plus gros que les grains d'hydroxyde de fer, le mélange fer-Ba/Sr n'est pas intime, et la structure du produit final après calcination est hétérogène.

La demande de brevet japonais 62052133 décrit l'obtention de particules d'hexaferrite de Ba par coprécipitation à partir d'un sel ferreux en l'absence d'ions carbonate. L'exemple comparatif ci-après montre qu'on n'obtient pas par ce procédé les propriétés avantageuses des particules obtenues selon la présente invention, et en particulier les propriétés magnétiques telles que l'aimantation et la répartition des champs de commutation.

La répartition des champs de commutation, dite ci-après "SFD" pour Switching Field Distribution, caractérise la largeur de la distribution des champs de commutation. A partir du cycle d'hystérésis, (flux magnétique M en fonction du champ magnétisant H), on trace la courbe dM/dH en fonction de H, dérivée du cycle, et on calcule la largeur à mi-hauteur $\Delta H$ du pic observé quand H = Hc ; cette valeur est appelée SFD. On divise cette valeur de SFD par le champ coercitif des particules, ce qui donne le rapport sans dimension SFD/Hc. Le champ coercitif et le SFD dépendent de la nature des particules, c'est pourquoi on utilise le rapport SFD/Hc qui est une meilleure valeur comparative que le SFD et qui varie dans le même sens.

Plus le SFD est faible, plus les moments magnétiques des particules commutent pour un champ proche du champ coercitif. Les transitions de flux lors d'un enregistrement magnétique sont donc mieux définies, l'épaisseur de la couche enregistrée peut être plus faible et mieux déterminée, contribuant ainsi à un bruit plus faible, donc à un rapport signal/bruit plus élevé, particulièrement lorsque la densité d'information est élevée. Pour résoudre le problème de l'augmentation du rapport signal/bruit, on doit donc chercher à diminuer la répartition des champs de commutation. Un SFD faible est aussi une indication de la répartition plus étroite de la taille des particules, d'une non agglomération de ces particules et d'une composition chimique plus pure.

La présente invention a pour objet un procédé de préparation d'hexaferrites de Ba ou de Sr, permettant d'obtenir des particules magnétiques qui se dispersent bien dans les liants habituellement utilisés pour les milieux magnétiques, et qui ont des propriétés magnétiques améliorées, en particulier une répartition étroite des tailles de particules, une meilleure aimantation et une répartition plus faible des champs de commutation.

Le procédé selon l'invention consiste à faire coprécipiter un sel de fer et un sel de baryum ou de strontium en milieu alcalin, à filtrer, laver et sécher le précipité d'hydroxydes obtenu, puis à chauffer à des températures comprises entre 750°C et 950°C, et de préférence entre 800 et 850°C, pour faire cristalliser l'hexaferrite, et il est caractérisé en ce que :

1) on coprécipite en l'absence d'ions carbonate,

2) après la coprécipitation, on neutralise le milieu jusqu'à l'obtention d'un pH compris entre 7 et 10,

3) après la filtration, on lave le coprécipité d'hydroxyde de fer et d'hydroxyde de Ba ou de Sr avec une solution aqueuse tamponnée à pH compris entre 7 et 10 d'un sel de baryum ou de strontium, ayant une concentration comprise entre $2 \times 10^{-3}$ et 0,2 M, de préférence entre $4 \times 10^{-3}$ et $40 \times 10^{-3}$ M.

Dans le cas où l'on souhaite abaisser le champ coercitif des particules obtenues, il est possible d'ajouter un métal dopant tel que Ni, Co, Ti, Cu, Sn, ou tout autre dopant connu dans la technique. Il suffit par exemple d'ajouter un sel de métal dopant dans le milieu de précipitation, à raison de la quantité souhaitée, pour coprécipiter l'hydroxyde de ce métal avec les hydroxydes de fer et de baryum ou de strontium.

Ce procédé permet d'obtenir des particules ayant une répartition étroite des champs de commutation, sans perte de baryum ou de strontium, donc sans diminution de l'aimantation.

La présente invention a donc aussi pour objet des particules d'hexaferrite de baryum ou de strontium, dopées ou non, qui, par rapport à celles obtenues par un procédé de co-précipitation de la technique antérieure, ont un champ coercitif et une aimantation plus élevés et un rapport de la répartition des champs de commutation au champ coercitif (SFD/Hc) au moins équivalent, comme le montrent les exemples ci-après.

La présente invention a en particulier pour objet des particules d'hexaferrites de Ba ou de Sr non dopées qui ont un rapport SFD/Hc égal ou inférieur à 0,45 et une aimantation à saturation supérieure à 55 emu/g, et plus avantageusement un rapport SFD/Hc égal ou inférieur à 0,40, une aimantation à saturation supérieure à 60 emu/g et un champ coercitif supérieur à 5000 Oe (400 kA/m).

L'invention a aussi pour objet un produit d'enregistrement magnétique contenant les particules d'hexaferrite de Ba ou de Sr qui présentent les caractéristiques définies ci-dessus. Le produit d'enregistrement peut prendre toute forme connue telle que bande, disque ou carte.

Il est particulièrement utile pour obtenir le milieu magnétique d'une carte à mémoire magnétique à haute capacité décrite dans la demande de brevet français 8814217 intitulée "Carte à mémoire magnétique à grande capacité et procédé de fabrication".

Selon un mode de réalisation de l'invention, on utilise comme produit de départ un sel de fer ferrique tel qu'un nitrate, un chlorure, un bromure, un iodure, un fluorure etc., et un sel de Ba ou de Sr tel qu'un chlorure, qu'on fait coprécipiter dans un milieu alcalin exempt de carbonate ayant un pH égal ou supérieur à 12. Après avoir ajusté le pH à une valeur entre 7 et 10 et filtré, on lave le précipité formé d'hydroxyde de fer et d'hydroxyde de baryum ou de strontium avec une solution d'un sel de Ba ou de Sr, tel qu'un chlorure ou un nitrate, ayant une concentration comprise entre $2 \times 10^{-3}$ et 0,2 M et de préférence entre $4 \times 10^{-3}$ et $4 \times 10^{-3}$ M. Le coprécipité est séché, puis recuit à une température comprise entre 750°C et 950°C et de préférence entre 800 et 850°C. On obtient des particules d'hexaferrites sous forme de plaquettes hexagonales.

Selon un mode de réalisation préféré de l'invention, on utilise comme produit de départ un sel ferreux ; par coprécipitation avec un sel de Ba ou de Sr, puis par oxydation, on obtient de l'oxyde ferrique hydraté alpha (goethite) contenant du Ba ou du Sr, qui sert de précurseur. Ce mode de réalisation permet d'obtenir des hexaferrites ayant la forme de la goethite servant de précurseur, aiguilles ou nodules.

De préférence, pour préparer le précurseur, on utilise le procédé décrit au brevet européen 45246. Dans ce procédé, on utilise un agent réducteur dans le milieu alcalin de précipitation, avant l'oxydation, de façon à éviter la présence d'ions ferriques au départ, et à contrôler ensuite l'oxydation. Ceci permet d'éviter la formation de sous-produits indésirables. L'agent réducteur approprié ne doit pas provoquer de précipité insoluble et doit être actif dans les conditions de pH du procédé. La réduction peut se faire par tout moyen, y compris par voie électrochimique à l'aide d'électrodes appropriées. De préférence, on utilise un composé dont le potentiel redox est inférieur à 1 volt. Comme exemples d'agent réducteur, on peut citer le chlorure stanneux, un dihydroxybenzène ou une hydroxylamine. La quantité d'agent réducteur est ajustée en fonction de la concentration des ions ferriques dans la solution, selon les indications ci-dessous.

Suivant ce procédé, on met en solution un sel ferreux qui peut être un chlorure, un bromure, un iodure, un fluorure, un nitrate, etc. Puis, on ajoute l'agent réducteur dont les proportions seront telles qu'un test colorimétrique des ions $Fe^{+++}$ (KSCN par exemple) soit négatif. On ajoute alors à cette solution, un sel de Ba ou de Sr tel qu'un chlorure ou un nitrate par exemple ; une légère acidification à l'aide d'un acide peut favoriser la dissolution.

Cette solution est ajoutée de préférence lentement (10 mn en général) à une solution aqueuse d'hydroxyde de métal alcalin (sodium ou potassium par exemple) en excès de 25 à 600%, de préférence de 100 à 200% par rapport à l'ensemble des sels. La température des solutions peut être comprise entre 0 et 100°C, et le pH est égal ou supérieur à 12.

Il est préférable d'utiliser un dispositif permettant de disperser finement les sels dans la solution aqueuse d'hydroxyde de métal alcalin, sans qu'il y ait contact avec un agent oxydant. Un tel dispositif peut être, par exemple, celui décrit au brevet français 1 157 156, appelé "Soucoupe rotative".

L'hydroxyde ferreux est ensuite oxydé par passage d'un courant gazeux oxydant de façon à obtenir les particules du précurseur. L'air est un très bon agent d'oxydation. Les meilleurs résultats sont obtenus si le gaz est réparti finement dans l'ensemble de la solution. La température d'oxydation peut varier entre 0 et 100°C à pression ambiante, selon la forme des particules que l'on souhaite. De préférence, elle est inférieure à 60°C, et encore plus avantageusement elle est inférieure à 40°C.

Le débit d'air pour un litre de solution est généralement compris entre 5 et 60 l/h, mais des débits plus forts peuvent aussi être utilisés. La fin de l'oxydation est mesurée en suivant l'évolution du potentiel du couple $Fe^{2+}/Fe^{3+}$ ; quand la concentration en $Fe^{2+}$ devient nulle, le potentiel change rapidement, selon les équations d'oxydo-réduction bien connues.

Après obtention du précurseur, on peut éventuellement effectuer une maturation à 90°C, pendant 1/2 heure à 1 heure.

Les concentrations en précurseur sont celles décrites dans le brevet européen 45246, à savoir entre 0,1 et 0,5 mole/l en fer, en général. L'excès alcalin est compris entre 25 % et 600 %, en général de 100 à 200 %.

La solution est alors filtrée. Dans un système travaillant en discontinu, le précipité est remis en dispersion dans un minimum d'eau et l'excès alcalin est neutralisé avec une solution d'acide dilué ($HNO_3$ ou $HCl$) de façon à ramener le pH de la solution entre 7 et 10. Dans un système en continu, il est possible, après élimination de la majorité de la phase aqueuse, d'opérer une recirculation d'eau dont le pH sera maintenu entre 7 et 10.

Les sels contenus dans cette eau sont alors éliminés par lavages successifs avec une solution diluée d'un sel de Ba ou de Sr, tel qu'un chlorure, soit par la technique de recirculation partielle, soit par la technique en eau perdue. La concentration de cette solution en sel de Ba ou de Sr peut varier entre $2 \times 10^{-3}$ M et 0,2 M, de préférence entre $4 \times 10^{-3}$ et $40 \times 10^{-3}$ M. La concentration optimale est ajustée en fonction du coefficient de solubilité de Ba $(OH)_2$ ou de $Sr(OH)_2$, de façon à ce qu'il y ait équilibre entre les ions baryum ou strontium redissous par la solution de lavage et ceux apportés par cette même solution. Si cette concentration est trop faible, on perd du baryum ou du strontium, et on n'obtient pas l'aimantation à saturation souhaitée. Si elle est trop élevée, il se produit une imprégnation de Ba ou de Sr à la surface, ce qui, dans le produit final, entraîne une chute du champ coercitif par apparition d'une deuxième population de particules à plus bas champ coercitif. Cette concentration ne dépend pas de la quantité de fer mise en jeu dans la synthèse. La quantité de solution de lavage n'est pas critique ; elle doit seulement être suffisante pour remettre le précipité en dispersion. Le pH de cette solution est maintenu à une valeur comprise entre 7 et 10 par adjonction d'une certaine quantité de $NH_4OH$. La valeur optimale est ajustée suivant la nature des particules. On a trouvé qu'on obtenait de bons résultats quand elle était égale à $8,0 \pm 0,5$ pour l'hexaferrite de Ba et à $10,0 \pm 0,5$ pour l'hexaferrite de Sr.

Cette technique de lavage supprime la dissolution du Ba ou du Sr dans les eaux de lavage, et permet donc de garder la stoechiométrie utilisée pour les réactifs de départ, qui est en général comprise entre 1 et 1,2.

Le produit est alors filtré et séché, puis porté à une température comprise entre 750°C et 950°C, et de préférence entre 800 et 850°C, pendant 2 à 4 heures, de façon à cristalliser l'hexaferrite de Ba ou de Sr.

Les particules obtenues après traitement thermique, sans traitement de lavage ultérieur, conservent la forme du précurseur initial. Leur diamètre est compris entre 0,02 et 0,1 μm, leur longueur entre 0,02 et 0,5 μm.

Il est possible, lors de la croissance du précurseur en solution aqueuse, de modifier la forme des particules en ajoutant des modificateurs de croissance cristalline, comme il est décrit à la demande de brevet WO 86/05026, tel que le pyrogallol.

Sans modificateur de croissance, l'acicularité des aiguilles obtenues, leur diamètre, leur longueur dépend de la température d'oxydation, de la concentration et du débit du gaz oxydant.

L'aimantation et le champ coercitif sont mesurés au VSM (Vibrating Sample Magnetometer) sous un champ magnétisant maximum de 20 000 Oe (1590 kA/m). Ces valeurs dépendent de la température d'oxydation et de l'excès alcalin. En ajustant ces deux paramètres de façon appropriée, on peut obtenir des particules d'hexaferrite non dopées ayant à la fois une aimantation à saturation supérieure à 60 emu/g, un champ coercitif supérieur à 5 000 Oe (400 kA/m) et un rapport SFD/Hc égal ou inférieur à 0,40.

Comme on l'a déjà mentionné ci-dessus, on peut modifier l'aimantation et/ou le champ coercitif en introduisant des ions dopants, comme il est connu dans la technique.

Les exemples suivants illustrent l'invention.

EXEMPLE 1 (Témoin)

Une solution aqueuse alcaline est préparée en dissolvant 44 g de NaOH dans 0,6 l d'eau distillée (soit 1,1 mole). Cette préparation est portée à 55°C. Dans 190 ml d'eau distillée acidifiée avec 10 ml d'acide chlorhydrique 1N, on dissout 53,7 g de $FeCl_2,4H_2O$ soit 0,27 mole ; 0,2 g de $SnCl_2,2H_2O$, soit $8,8 \times 10^{-4}$ mole, sont ajoutés à cette dernière solution. Il est facile de vérifier avec KSCN qu'il n'y a plus d'ions ferriques en solution. 5,5 g de $BaCl_2,2H_2O$ sont alors mis en solution ($22,5 \times 10^{-3}$ mole). Cette quantité correspond à la stoechiométrie du produit final $BaFe_{12}O_{19}$.

Cette solution préalablement chauffée à 55°C est versée doucement (10 mn) sous forte agitation dans la solution alcaline, à un pH supérieur à 12. Il se forme un précipité.

Celui-ci est ensuite oxydé par un courant d'air (30 l/h) qui est réparti uniformément dans la solution au moyen d'un verre fritté, à 55°C et à pH supérieur à 12. Le potentiel $Fe^{++}/Fe^{+++}$ de la solution est contrôlé. Au bout de 3 heures, ce potentiel change rapidement pour passer de -800 mV à -200 mV environ. Le précipité est alors filtré, puis lavé à l'eau distillée jusqu'à ce que le pH de l'eau sortant du filtre soit descendu aux environs de 8 à 9. Après séchage, celui-ci est traité 3 heures à 830°C.

Les résultats sont donnés au tableau I.

EXEMPLE 2 (Témoin)

On reprend le mode opératoire de l'exemple 1, sauf que le précipité n'est pas lavé, mais remis en dispersion dans 150 $cm^3$ d'eau. L'excès de soude est alors neutralisé par HCl 1N (le pH de la solution est descendu à 7). La solution est filtrée et lavée avec 500 $cm^3$ d'eau distillée, afin d'éliminer les sels résiduels (concentration en ions $Na^+$ inférieure à $10^{-3}$ M). Après séchage, le précipité est traité 3 heures à 830°C.

Les résultats sont donnés au tableau I.

EXEMPLE 3 (Invention)

On reprend le mode opératoire de l'exemple 1. Le précipité n'est pas lavé, mais remis en dispersion dans 150 $cm^3$ d'eau. On neutralise l'excès de soude avec HCl 1N de façon à abaisser le pH à 8, puis on filtre le précipité et on le lave avec 500 $cm^3$ d'une solution $8 \times 10^{-3}$ M de $BaCl_2,2H_2O$ dont le pH est ajusté à $8,0 \pm 0,1$ avec $NH_4OH$. Après séchage, le précipité est traité 3 heures à 830°C.

Les résultats sont indiqués au tableau I. On peut constater que l'aimantation à saturation est nettement plus élevée que pour les témoins des exemples 1 et 2.

## TABLEAU I

| Exemples | Im* emu/g | Hc-Oe** (kA/m) | SFD-Oe (kA/m) | SFD/Hc |
|---|---|---|---|---|
| 1 (Témoin) | 36 | 4400 (350) | 2200 (175) | 0,5 |
| 2 (Témoin) | 39 | 4750 (378) | 1850 (148) | 0,39 |
| 3 (Invention) | 59 | 4650 (370) | 2100 (167) | 0,45 |

\* Im = Aimantation à saturation

\*\* Hc = Champ coercitif

EXEMPLE 4 (Témoin)

On prépare une solution alcaline aqueuse en dissolvant 29 g (0,72 mole) de NaOH dans 0,6 l d'eau distillée et on porte à 35°C. On dissout 36 g de $FeCl_2,4H_2O$ (0,181 mole) dans 190 ml d'eau distillée acidifiée avec 10 ml d'acide chlorhydrique 1N, et on ajoute 0,2 g de $SnCl_2,2H_2O$ (8,8 x $10^{-4}$ mole). On vérifie avec KSCN qu'il n'y a plus d'ions ferriques en solution. On ajoute alors 4,4 g de $BaCl_2,2H_2O$ (18 x $10^{-3}$ mole). Cette quantité correspond à un excès de Ba de 20% par rapport à la stoechiométrie du produit final $BaFe_{12}O_{19}$. Cette solution préalablement chauffée à 35°C est versée doucement (10 mn) sous forte agitation dans la solution alcaline.

On reprend ensuite le mode opératoire de l'exemple 1, sauf qu'on maintient la température à 35°C pendant l'oxydation. Les résultats sont indiqués au tableau II.

EXEMPLE 5 (Témoin)

On reprend le mode opératoire de l'exemple 4, sauf que le précipité n'est pas lavé, mais remis en solution et neutralisé comme à l'exemple 2.

Les résultats sont indiqués au tableau II.

EXEMPLE 6 (Invention)

On reprend le mode opératoire de l'exemple 4. Le précipité n'est pas lavé, mais remis en dispersion dans 150 cm³ d'eau. On neutralise l'excès de soude avec HCl 1N de façon à abaisser le pH à 8, puis on filtre le précipité et on le lave avec 500 cm³ d'une solution 8 x $10^{-3}$ M de $BaCl_2,2H_2O$ dont le pH est ajusté à 8,0 ± 0,1 avec $NH_4OH$. Après séchage, le précipité est traité 3 heures à 830°C.

Les résultats sont indiqués au tableau II. Dans ce cas aussi, on observe une aimantation à saturation plus élevée que pour les témoins des exemples 3 et 4.

## TABLEAU II

| Exemples | Im* emu/g | Hc-Oe** (kA/m) | SFD-Oe (kA/m) | SFD/Hc |
|---|---|---|---|---|
| 4 (Témoin) | 38 | 5100 (406) | 1750 (140) | 0,34 |
| 5 (Témoin) | 37 | 5050 (402) | 1650 (132) | 0,32 |
| 6 (Invention) | 62 | 5300 (421) | 1800 (143) | 0,34 |

* Im = Aimantation à saturation
** Hc = Champ coercitif

EXEMPLE 7

Cet exemple est un exemple de synthèse à l'échelle semi-industrielle. On dissout 21,4 kg de NaOH à 50 % dans 210 litres d'eau. On porte à 25°C. On prépare une solution en ajoutant, dans l'ordre, dans 50 litres d'eau acidifiée avec 0,75 l d'HCl N, 12,06 kg de $FeCl_2,4H_2O$, 48 g de $SnCl_2,2H_2O$, et 1,48 kg de $BaCl_2,2H_2O$. Cette solution chauffée à 25°C est versée sous forte agitation dans la solution alcaline. Il se forme un précipité qu'on oxyde par un courant d'air et qu'on traite comme décrit à l'exemple 6, sauf qu'on lave 3 fois avec une quantité de solution de $BaCl_2,2H_2O$ $8 \times 10^{-3}$ M, suffisante pour remettre le précipité en dispersion, et qu'on calcine dans un four rotatif.

Les particules d'hexaferrite de baryum obtenues ont une aimantation à saturation de 64 emu/g, un champ coercitif de 5 000 Oe (398 kA/m), un SFD de 1800 Oe (143 kA/m) et un rapport SFD/Hc de 0,36.

EXEMPLE 8 (Comparatif)

Cet exemple est réalisé suivant le mode opératoire de l'exemple 1 de la demande de brevet japonais 6252133.

On dissout 9,16 g de $BaCl_2,2H_2O$ ($37,5 \times 10^{-3}$ mole) dans 240 ml d'une solution contenant 59,6 g de $FeCl_2,4H_2O$ (0,3 mole), ce qui correspond à un excès de Ba de 50 % par rapport à la stoechiométrie. On ajoute 60 g de NaOH et de l'eau pour faire 1 l. On chauffe la suspension alcaline de $Fe(OH)_2$ et on fait passer un courant d'air dont on a éliminé le $CO_2$, à 40°C et à une vitesse de 250 l/heure. Au bout de 5 heures, les ions ferreux sont totalement transformés en ions ferriques. On filtre le précipité, on le lave à l'eau et on le sèche à 80°C. On le traite ensuite 3 heures à 830°C.

Les résultats sont les suivants :

Im     = 52,9 emu/g
Hc     = 5028 Oe (400 kA/m)
SFD    = 2820 Oe (225 kA/m)
SFD/Hc = 0,56

On constate que le procédé décrit dans la demande de brevet japonais 6252133 ne permet pas d'obtenir à la fois un faible rapport SFD/Hc et une forte aimantation si on le compare aux résultats obtenus avec le procédé de l'invention.

EXEMPLE 9 (Invention)

On reprend le mode opératoire de l'exemple 1. On utilise 36,7 g de NaOH, 44,7 g (0,22 mole) de $FeCl_2,4H_2O$ et 3,6 g (0,018 mole) de $SrCl_2, 2H_2O$ (quantité stoechiométrique pour $SrFe_{12}O_6$). La température d'oxydation est de 25°C. L'étape de neutralisation du précipité est effectuée jusqu'à atteindre un pH de 10. Le lavage après filtration est réalisé avec une solution de $16 \times 10^{-3}$ mole/l de $SrCl_2,2H_2O$ dont le pH a été ajusté à $10,0 \pm 0,1$ avec $NH_4OH$. Après séchage, le précipité est traité 2 heures à 830°C.

Les caractéristiques sont les suivantes :

Im     = 61.7 emu/g
Hc     = 470 kA/m (5900 Oe)
SFD    = 169 kA/m (2120 Oe)
SFD/Hc = 0,36

EXEMPLE 10 (Témoin)

On disperse 25 g de $Fe(NO_3)_3,9H_2O$ dans 70 ml d'eau distillée et on chauffe à 60°C. Puis on ajoute 1,26 g de $BaCl_2,2H_2O$ dont la dissolution est rendue possible par le pH acide de la solution et la température.

On prépare parallèlement une solution de 13,8 g de $K_2CO_3$ et 11,2 g de KOH dans 70 ml d'eau. La réaction est exothermique, et on ajuste la température à 60°C.

On verse la solution saline dans la solution basique et on précipite un mélange d'hydroxyde de fer et d'hydroxyde de baryum. L'agitation doit être telle que la solution reste toujours homogène. Après filtration et lavage, le produit est séché, puis traité 3 heures à 800°C pour cristalliser la ferrite de baryum $BaFe_{12}O_{19}$. On obtient les résultats suivants :

Im     = 60 emu/g
Hc     = 421 kA/m (5290 Oe)
SFD    = 199 kA/m (2500 Oe)
SDF/Hc = 0,47

EXEMPLE 11 (Invention)

On procède comme précédemment, sauf que la solution basique se compose de 12,5 g de KOH dans 70 ml d'eau.

D'autre part, le lavage des précipités est effectué (comme expliqué précédemment) avec une solution de $BaCl_2,2H_2O$ (2 g/l) jusqu'à neutralité. On obtient les résultats suivants :

Im = 62 emu/g
Hc = 395 kA/m (4900 Oe)
SFD = 135 kA/m (1700 Oe)
SFD/Hc = 0,34

On observe aussi dans ce mode de réalisation, à la fois une augmentation de l'aimantation à saturation et une diminution de la répartition du champ de commutation des particules obtenues.

## Revendications

1. Procédé de préparation d'hexaferrites de baryum ou de strontium, consistant à faire coprécipiter un sel de fer et un sel de baryum ou de strontium en milieu alcalin, en l'absence d'ions carbonate à un pH égal ou supérieur à 12 à filtrer, laver et sécher le précipité d'hydroxydes obtenu, puis à chauffer à des températures comprises entre 750°C et 950°C pour faire cristalliser l'hexaferrite, caractérisé en ce que :
   1) après la coprécipitation, on ajuste le pH du milieu jusqu'à l'obtention d'un pH compris entre 7 et 10,
   2) après filtration, on lave le coprécipité d'hydroxyde de fer et d'hydroxyde de Ba ou de Sr, avec une solution aqueuse tamponnée à pH compris entre 7 et 10 d'un sel de baryum ou de strontium, ayant une concentration comprise entre $2 \times 10^{-3}$ et 0,2 M.

2. Procédé conforme à la revendication 1, dans lequel la concentration de la solution de sel de Ba ou de Sr est comprise entre $4 \times 10^{-3}$ et $40 \times 10^{-3}$ M.

3. Procédé conforme à l'une des revendications 1 ou 2, dans lequel le précipité d'hydroxyde obtenu est chauffé à une température comprise entre 800 et 850°C.

4. Procédé conforme à l'une des revendications 1 à 3, dans lequel le sel de fer est un sel ferrique.

5. Procédé conforme à l'une des revendications 1 à 3, dans lequel le sel de fer est un sel ferreux, et on oxyde le coprécipité d'hydroxydes obtenu.

6. Procédé conforme à la revendication 5, dans lequel on oxyde par un courant d'air, à une température comprise entre 0 et 100°C.

7. Procédé conforme à la revendication 6, dans lequel on oxyde par un courant d'air à une température inférieure à 60°C.

8. Procédé conforme à la revendication 6, dans lequel on oxyde par un courant d'air à une température inférieure à 40°C.

9. Procédé conforme à l'une des revendications 5 à 8, dans lequel on ajoute un réducteur dans le milieu de précipitation.

10. Procédé conforme à la revendication 9, dans lequel le réducteur est du chlorure stanneux, un dihydroxybenzène ou une hydroxylamine.

11. Particules d'hexaferrites de baryum ou de strontium,, préparées suivant le procédé d'une quelconque des revendications 1 à 10,
ayant à la fois un rapport de la répartition des champs de commutation au champ coercitif égal ou inférieur à 0,45 et une aimantation à saturation supérieure à 55 emu/g.

12. Particules d'hexaferrites de baryum ou de strontium de la revendication 12 ayant à la fois un rapport de la répartition des champs de commutation au champ coercitif égal ou inférieur à 0,40, une aimantation à saturation supérieure à 60 emu/g, et un champ coercitif supérieur à 5 000 Oe (400 kA/m).

13. Produit d'enregistrement magnétique contenant les particules d'hexaferrites de Ba ou de Sr des revendications 11 à 13.

## Claims

1. A process for preparing strontium or barium hexaferrites consisting in coprecipitating an iron salt with a barium or strontium salt in alkaline medium free from carbonate ions at a pH higher than or equal to 12, in filtering, washing and drying the precipitate of hydroxides obtained, then in heating at a temperature between 750°C and 950°C to crystallize hexaferrite, characterized in that :
   1) after coprecipitation, the pH of the medium is adjusted until a pH between 7 and 10 is obtained,
   2) after filtration, the coprecipitate formed of iron hydroxide and Ba or Sr hydroxide is washed with an aqueous solution of a barium or strontium salt buffered at a controlled pH, having a concentration between $2 \times 10^{-3}$ and 0.2 M.

2. A process according to claim 1, wherein the concentration of the Ba or Sr solution is between $4 \times 10^{-3}$ and $40 \times 10^{-3}$ M.

3. A process according to any of claims 1 or 2, wherein the coprecipitate of hydroxides obtained is heated at a temperature between 800°C and 850°C.

4. A process according to any of claims 1 to 3, wherein the iron salt is a ferric salt.

5. A process according to any of claims 1 to 3, wherein the iron salt is a ferrous salt and the coprecipitate of hydroxides obtained is oxidized.

6. A process according to claim 5, wherein oxidation is obtained by means of an air stream at a temperature between 0 and 100°C.

7. A process according to claim 6, wherein oxidation is obtained by means of an air stream at a temperature below 60°C.

8. A process according to claim 6, wherein oxidation is obtained by means of an air stream at a temperature below 40°C.

9. A process according to any of claims 5 to 8 wherein a reducing agent is added in the precipitation medium.

10. A process according to claim 9, wherein the reducing agent is stannous chloride, dihydroxybenzene or hydroxylamine.

11. Barium or strontium hexaferrite particles prepared according to the process of any of claims 1 to 10, having at the same time a switching field distribution less than or equal to 0.45 and a saturation magnetization higher than 55 emu/g.

12. Barium or strontium hexaferrite particles according to claim 12 having at the same time a ratio of the switching field distribution to the coercive field less than or equal to 0.4, a saturation magnetization higher than 60 emu/g and a coercive field higher than 5,000 Oe (400 kA/m).

13. Magnetic recording medium containing Ba or Sr hexaferrite particles according to any of claims 11 to 13.

## Patentansprüche

1. Verfahren zur Herstellung von Hexaferriten des Bariums oder des Strontiums, bei dem man ein Eisensalz und ein Bariumsalz oder ein Strontiumsalz gemeinsam in einem alkalischen Milieu in Abwesenheit von Carbonationen bei einem pH-Wert von gleich oder über 12 ausfällt, den erhaltenen Niederschlag von Hydroxiden abfiltriert, wäscht und trocknet und danach auf Temperaturen zwischen 750°C und 950°C zur Herstellung von kristallinem Hexaferrit erhitzt, dadurch gekennzeichnet, daß man:
   1) nach der gemeinsamen Ausfällung den pH-Wert des Milieus auf einen Wert zwischen 7 und 10 einstellt und daß man
   2) nach der Filtration das durch gemeinsame Ausfällung erhaltene Hydroxid des Eisens und des Bariums oder des Strontiums mit einer wäßrigen Lösung eines Salzes des Bariums oder des Strontiums wäscht, die eine Konzentration zwischen $2 \times 10^{-3}$ und 0,2 M aufweist und auf einen pH-Wert zwischen 7 und 10 abgepuffert ist.

2. Verfahren nach Anspruch 1, bei dem die Konzentration der Lösung des Salzes des Bariums oder des Strontiums zwischen $4 \times 10^{-3}$ und $40 \times 10^{-3}$ M liegt.

3. Verfahren nach einem der Ansprüche 1 oder 2, bei dem man den erhaltenen Hydroxidniederschlag auf eine Temperatur zwischen 800 und 850°C erhitzt.

4. Verfahren nach einem der Ansprüche 1 bis 3, bei dem man als Eisensalz ein Ferrisalz verwendet.

5. Verfahren nach einem der Ansprüche 1 bis 3, bei dem man als Eisensalz ein Ferrosalz verwendet und daß man das erhaltene Hydroxid-Ausfällungsprodukt oxidiert.

6. Verfahren nach Anspruch 5, bei dem man mittels eines Luftstromes bei einer Temperatur zwischen 0 und 100°C oxidiert.

7. Verfahren nach Anspruch 6, bei dem man durch einen Luftstrom bei einer Temperatur unterhalb 60°C oxidiert.

8. Verfahren nach Anspruch 6, bei dem man mittels eines Luftstromes bei einer Temperatur unterhalb 40°C oxidiert.

9. Verfahren nach einem der Ansprüche 5 bis 8, bei dem man dem Ausfällungsmilieu ein Reduktionsmittel zufügt.

10. Verfahren nach Anspruch 9, bei dem man als Reduktionsmittel Zinnchlorid, ein Dihydroxybenzol oder ein Hydroxylamin verwendet.

11. Teilchen aus Hexaferriten des Bariums oder des Strontiums, hergestellt nach einem Verfahren der Ansprüche 1 bis 10, die zum einen aufweisen ein Verhältnis der Verteilung der Kommutationsfeldstärke zur Koerzitivfeldstärke von gleich oder unterhalb 0,45 und zum anderen eine Magnetisierungssättigung oberhalb 55 emu/g.

12. Teilchen aus Hexaferriten des Bariums oder des Strontiums nach Anspruch 11, die zum einen ein Verhältnis der Verteilung der Kommutationsfeldstärke zur Koerzitivfeldstärke.von gleich oder unterhalb 0,40 aufweisen und zum anderen eine Magnetisierungssättigung über 60 emu/g, sowie eine Koerzitivfeldstärke von über 5000 Oe (400 kA/m).

13. Magnetisches Aufzeichnungsmaterial mit Teilchen aus Hexaferriten des Bariums oder des Strontiums nach Ansprüchen 11 bis 12.